# EUROPEAN PATENT SPECIFICATION

(11) **EP 1 509 840 B1**
(45) Date of publication and mention of the grant of the patent: **08.08.2018**
(21) Application number: 03719027.9
(22) Date of filing: 25.04.2003
(51) Int. Cl.: G06F 9/30, G06F 9/32, G06F 9/38

(54) **METHOD AND APPARATUS FOR HOISTING LOOP-INVARIANT CODE WORD PORTIONS**
VERFAHREN UND VORRICHTUNG ZUR VERSETZUNG VON BEFEHLSTEILEN, DIE IN DER SCHLEIFE INVARIANT SIND, NACH AUSSERHALB DER SCHLEIFE
METHODE ET APPAREIL POUR DEPLACER, EN DEHORS DE LA BOUCLE, DES PORTIONS DE MOTS DE COMMANDE INVARIANTS DANS LA BOUCLE

(30) Priority: 22.05.2002 EP 02077020
(43) Date of publication of application: 02.03.2005
(73) Proprietor: Koninklijke Philips N.V., 5656 AE Eindhoven (NL)
(72) Inventor: AUGUSTEIJN, Alexander, NL-5656 AA Eindhoven (NL); LEIJTEN-NOWAK, Katarzyna, NL-5656 AA Eindhoven (NL); DE OLIVEIRA KASTRUP PEREIRA, Bernardo, NL-5656 AA Eindhoven (NL)
(74) Representative: Eleveld, Koop Jan
(86) International application number: PCT/IB2003/001849
(87) International publication number: WO 2003/098431

(56) References cited:
- EP-A- 0 785 506
- EP-A- 1 128 262
- JP-A- H01 284 926
- US-A- 5 812 856
- BIRUS T ET AL: "Strategies for benchmarking with optimizing compilers" PROCEEDINGS OF THE NATIONAL AEROSPACE AND ELECTRONICS CONFERENCE. (NAECON). DAYTON, MAY 18 - 22, 1992, NEW YORK, IEEE, US, vol. 2 CONF. 44, 18 May 1992 (1992-05-18), pages 581-586, XP010064313 ISBN: 0-7803-0652-X
- JESSHOPE C: "Implementing an efficient vector instruction set in a chip multi-processor using micro-threaded pipelines", COMPUTER SYSTEMS ARCHITECTURE CONFERENCE, 2001. ACSAC 2001. PROCEEDING S. 6TH AUSTRALASIAN 29-30 JANUARY 2001, PISCATAWAY, NJ, USA,IEEE, 1730 MASSACHUSETTS AVE., NW WASHINGTON, DC 20036-1992 USA, 29 January 2001 (2001-01-29), pages 80-88, XP010531910, ISSN: 1530-0927, DOI: 10.1109/ACAC.2001.903363 ISBN: 978-0-7695-0954-9

## Description

The present invention relates to a method and apparatus for decoding a sequence of at least two instructions of a data processing program into a sequence of code words used to control a data path, e.g. of a digital signal processor or the like.

Computer architectures consist of a fixed data path which is controlled by a control word. This control word consists of several parts, each of which controls parts of the data path. These parts may comprise multiplexers, register addresses, operation codes for arithmetic logic units (ALUs) or other functional units, etc. Each instruction issued generates a new control word, usually by means of an instruction decoder which translates the binary format of the instruction into the corresponding control word(s), or by means of a micro store, i.e. a memory which contains the control words directly.

When a processor executes a loop function, the corresponding procedure may be interpreted not only as sequence of instructions, but also as a pipelined circuit which is emulated in time. In such a pipelined circuit, data moves down edges of a data flow graph at each clock period, wherein the edges of the graph are implemented by registers. On the other hand, the data flow graph may be implemented by a program where the different operations are executed in a certain order, as determined by an instruction scheduler. The instruction may either be executed one-by-one or with some parallelism involved, in case the processor architecture supports such a parallel processing. To execute these operations, respective control words in the processor will configure a part of the data flow graph at each instruction, while the edges are implemented by general processor registers.

However, the cost of embedded systems in terms of power dissipation and area is to a large extent determined by the memories required for program storage. High-level compilation in general leads to a penalty in terms of code size compared to handcrafted assembly code. To keep the code size within acceptable bounds efficient instruction encoding and code compaction are of key importance in the design of a new processor core. Furthermore, explanation of the different constraints regarding performance of different parts of a program allows for a trade-off between code density and performance.

Document US 5862384 discloses a compiler optimizing device provided with an optimizing section arranged to transfer loop invariant expressions out of the loop based on update variables recognized in an update variable control table. This reduces the total number of executed statements and leads to an effective optimization of processing and accelerated processing speed.

However, certain instruction sequences, such as those representing a loop, will result in a sequence of control words which have a fixed part and a standard part. Although the fixed part of the control word does not change, a configuration memory context is reloaded during a large number of cycles determined by the execution time of such an invariant sequence. This time penalty leads to decreased processing performance and increased power consumption.

European patent application EP 1 128 262 A2 discloses mapping circuitry including a first candidate output value producing unit which produces a first candidate output value that differs by a first offset value from a received input value. A second candidate output value producing unit operates, during operation of the first candidate output value producing unit to produce the first candidate output value, to produce a second candidate output value that differs by a second offset value from the received input value.

C. Jesshope in "Implementing an efficient vector instruction set in a chip multi-processor using micro-threaded pipelines", Proceedings of the 6th Australasian Computer Systems Architecture Conference 2001, pages 80-88, discloses a combination of both horizontal and vertical micro-threading with vector instruction descriptors.

Japanese Patent application H1-284,926 discloses an instruction reading system for an arithmetic unit wherein an instruction word and a parameter are stored in a fixed instruction register and a variable instruction register means respectively.

It is therefore an object of the present invention to provide a decoding method and apparatus for encoding an instruction sequence, by means of which an increased processing performance and a decreased power consumption can be obtained.

This object is achieved by a method as claimed in claim 1 and by an apparatus as claimed in claim 17. Accordingly, a way in between the two extremes of fixed circuit implementation and program-based execution implementation is provided to configure a part of the data flow graph before entering the loop, so that it will be fixed during the loop. This corresponds to fixing a part of the data path, i.e. fixing some parts of the control word. Since this leads to a more narrow control word to be issued each cycle, both power consumption and (micro) code size decrease. This technique can be regarded as a kind of control word hoisting, wherein the compiler term "hoisting" means moving loop-invariant control signals (e.g. opcodes, addresses, etc.) out of the loop. However, with respect to the compiler, this technique has little impact, as the instruction schedule is not altered. Only the encoding of the instructions within the respective code word sequence, e.g. loop, is affected. In particular, the invariant portion, i.e. the fixed part, of the control word does not come from the instruction decoder or the micro store anymore, but may be derived elsewhere, e.g. from a separate memory. As an alternative, a re-configurable hardware, e.g. embedded Field Programmable Gate Arrays (FPGAs), can be used to take care of the wiring of the invariant part.

Due to the fact that the invariant part of the control word is no longer redundantly replicated in every control word, the necessary micro code memory size is reduced.

In the dedicated memory alternative, the dedicated memory may be implemented as a look-up table or a content addressable memory. The dedicated memory may be shared among a plurality of functional units of the data paths, or a plurality of dedicated memories may be allocated to respective functional units of the data paths.

Furthermore, the invariant code word portion may be used to address the dedicated memory, so as to obtain an expanded new code word which is used to control the data path. This may be achieved by using the same connections as the original sequence of code words. Then, the connections may be selected via a multiplexing function.

The bit positions of the invariant code word portion may be specified in a code word by using a configuration mask. In particular, a control word loading function may be controlled based on the configuration mask so as to direct the bits of the code word to appropriate positions of a control register. This may be achieved by using the configuration mask to generate switching signals for connecting to the control register. The size of the dedicated memory may correspond to the size of the instruction register.

In the re-configurable hardware alternative, a configuration context may be selected based on the invariant code word portion. Furthermore, the number of control bits controlling the circuitry mapped onto the re-configurable hardware may be reduced by embedding part of the invariant control into the configuration itself. Thereby, the invariant part of the code words can be hoisted as well, reducing the instruction word width necessary to control the circuitry mapped onto the re-configurable hardware. Moreover, those instructions with the largest invariant code word portions may be selected from the at least one instruction, and the selected instructions may be used for mapping onto the re-configurable hardware. Hence, the re-configurable hardware is used for those instructions or instruction sequences which can benefit most from hoisting.

Other advantageous developments are defined in the dependent claims.

In the following, the present invention will be described in greater detail based on preferred embodiments with reference to the drawings, in which:
Fig. 1 shows a schematic diagram indicating two decoding alternatives according to a first preferred embodiment;
Fig. 2 shows an example of a multiplexer-based selection of a register file;
Fig. 3 shows a principle diagram indicating a simple cut separation of a configuration part from a standard part of a control word according to the first preferred embodiment;
Fig. 4 shows a principle diagram indicating the use of a configuration mask and a control word loader for combining a configuration part and a standard part of a code word according to the first preferred embodiment;
Fig. 5 shows a schematic diagram indicating a control word loader architecture which can be used in the first preferred embodiment;
Fig. 6 shows an example of a programmable cross-point switch which can be used in the control word loader architecture according to Fig. 5;
Fig. 7 shows a schematic diagram indicating an approach for controlling a re-configurable register file based on the fixed control word, according to a second preferred embodiment; and
Figs. 8A and 8B show schematic diagrams of re-configurable logic units which may be used in the second preferred embodiment.

The preferred embodiments will now be described on the basis of the decoding and processing of a loop function, as an example for a code sequence in a digital signal processor. According to the preferred embodiments, a part of the data flow graph is configured before entering the loop, so that it will be fixed during the loop. This corresponds to fixing a part of the data path, i.e. fixing some parts of the control word.

In general, fixing a part of the control word for a loop-invariant data flow graph may mean:
- fixing connections between functional units and register files
- fixing addresses within a register file space;
- fixing opcodes for functional units.

The generation of the fixed part of the control word, associated with an arbitrary loop-invariant data flow graph, takes place during code generation or instruction decoding for that loop. Then, during execution of the loop, the standard or variable part of the control word is obtained from a local instruction decoder or a micro store. The fixed or invariant part of the control word is used to configure a part of the data path to be fixed during the sequence of code words.

According to the first preferred embodiment, the fixed part of the code word is obtained from a dedicated memory block implemented as a look-up table or a content addressable memory (CAM). Depending on the instruction hierarchy in the considered architecture, the dedicated memory block may be placed globally or locally in the processor architecture.

According to a second preferred embodiment, the fixed part of the control word may be used to fix re-configurable aspects of a re-configurable hardware or logic unit provided in the processor architecture.

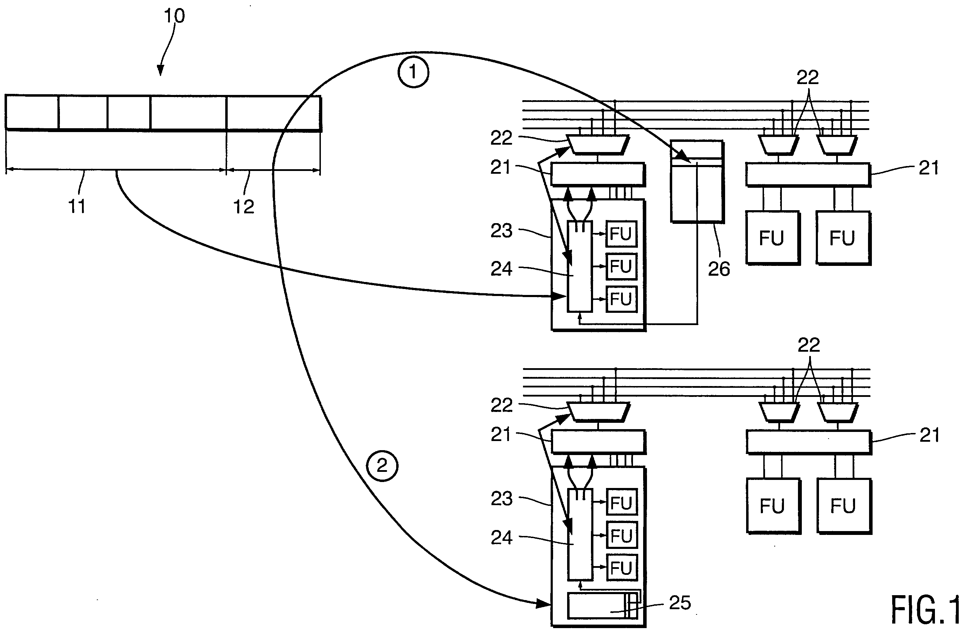

In the following, implementation examples for the first preferred embodiment are explained with reference to Figs. 1 to 6.

Fig. 1 shows a schematic diagram of a portion of a digital signal processor architecture with the above two possible approaches for placing the dedicated memory block. As indicated in the left upper part of Fig. 1, the control word 10 consists of a standard or variable part 11 and a fixed or invariant part 12. The fixed part 12 does not change during the loop. According to the first approach, indicated in the right upper portion of Fig. 1, a dedicated memory block 26 is connected to an instruction decoder 24 of a first functional unit cluster 23 to which a register file 21 is connected. The register file 21 can be accessed from interconnect lines via a multiplexer 22. Thus, in the first approach, the dedicated memory block 26 is placed globally, such that the fixed part of the control word is shared between a number of functional unit clusters. It is noted that the registers in register file 21 can also be addressed directly from decoder 24, without going through multiplexer 22. This part of the addressing will correspond to the fixed part 12 of the control word and will remain unchanged during the loop.

According to the second possible approach indicated in the right lower portion of Fig. 1, the dedicated memory block 25 is arranged within and specific for a given functional unit cluster, e.g. the functional unit cluster 23. Again, the dedicated memory block 25 is connected to the instruction decoder 24 of the functional unit cluster 23. The fixed part of the control word 12 may in both approaches be encoded (e.g. by the compiler or assembler), to shorten its original bit-width. Then, it is later expanded or decoded in the respective dedicated memory blocks 25, 26 to a new control word based on which a modified instruction type is obtained.

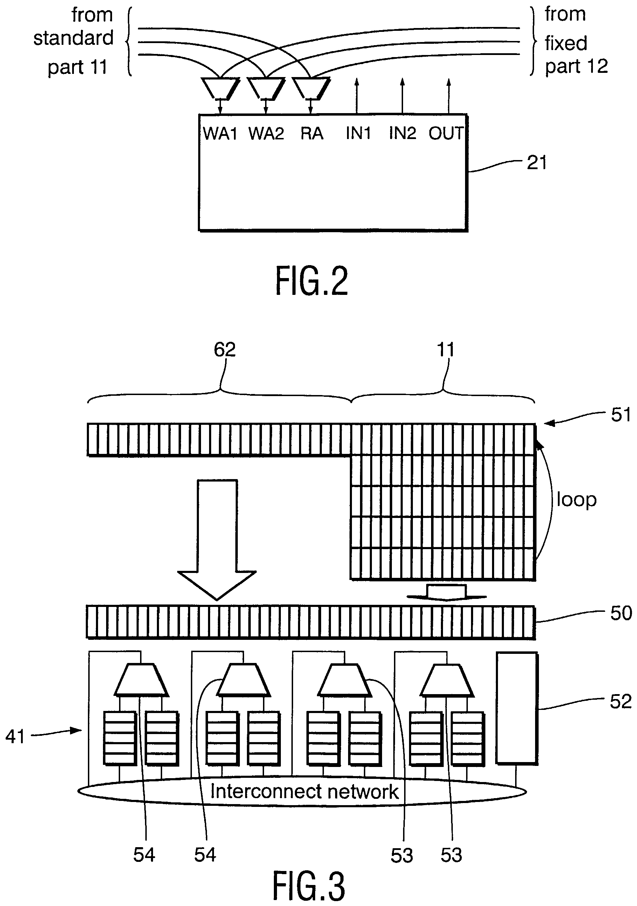

Fig. 2 shows an example of a register file 21 which can be controlled by both standard and modified instruction types. The standard instruction type is obtained on the basis of the standard part 11 of the control word 10, while the modified instruction type is obtained on the basis of the fixed part 12 of the control word 10 via the respective dedicated memory blocks 25, 26. In particular, during a loop, both standard and modified instruction types are generated by the instruction decoder 24 so as to provide the required processing and register functions of the loop. It is noted that the conversion of the fixed part 12 and the standard part 11 of the control word 10 into the standard and modified instruction type, respectively, is not shown in Fig. 2. To reduce the total implementation costs, especially wiring, this new control word generated by the respective dedicated memory blocks 25, 26 may use the same connections to the controlled resources as the standard instruction decoder 24. As indicated in Fig. 2, the selection may be achieved by using local multiplexers provided at the respective inputs of the register file 21. Thus, both control signals obtained from the standard part 11 and the fixed part 12 of the control word 10 can be used to control the register file 21.

Due to the fact that the loop-invariant or fixed part 12 of the control word 10 is separated from the loop-variant or standard part 11, each loop of an application will have a loop-invariant part or configuration per se. The remaining part may change during loop execution. This reduces the necessary micro code memory size, since the configuration part is not redundantly replicated in every control word within the loop. In practice, the control bits that do not change during loop execution may be distributed arbitrarily over the control word. A problem is then during execution to load the proper configuration and standard bits from the micro code memory, into the appropriate bit positions of the control register at the instruction decoder 24, based on which the resources of the processor data path is controlled. This may be solved by providing for each loop in the application, a configuration mask which specifies which bit positions in the control register are loop-invariant, and which are not. Then, a control word loader will direct the bits in the configuration part to the appropriate positions of the control register under control of the configuration mask. The execution of the loop can then start. For every control word derived from the standard parts 11, the control word loader will direct each bit to its appropriate position in the control register, without changing the pre-loaded configuration of that loop, as defined by the dedicated memory block 25 or 26.

Fig. 3 shows a schematic diagram indicating a simplified generation of a control data by a simple cut in some points in the control data to separate the configuration part from the standard part. According to Fig. 3, a control register 50 is provided to control a processor data path 41 comprising two arithmetic logic units (ALU) 54 and two Multiply/Accumulate units (MAC) 53 with respective register files and a random access memory (RAM) 52. As indicated in Fig. 3, the control bits that do not change during the loop execution, i.e. the bits of the configuration part 62, are directly transferred to a corresponding portion of the control register 50, while the standard part 11 of the control data stored in the micro code memory 51 changes during the loop execution and is supplied to the remaining portion of the control register 50. Although this simplified situation can be enforced by the architecture and exploited by the compiler at the cost of missing some of the hoisting possibilities, in the general case there is no guarantee that the loop-invariant bits will all be adjacent to each other, in straight sequence, as shown in Fig. 3. To exploit the possibilities of control word hoisting to the full, a more general solution is required.

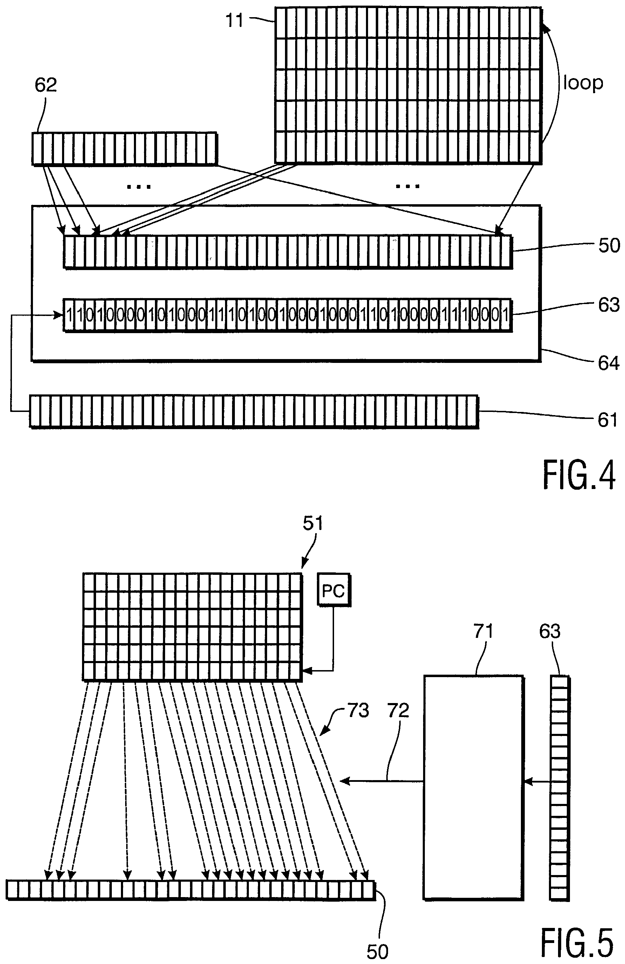

Therefore, Fig. 4 shows a general case, where the hatched locations in the control register 50 correspond to the loop-invariant or configuration bits. As can be gathered from Fig. 4, the control bits that do not change during the loop execution are distributed arbitrarily over the control word in the control register 50, in no particular sequence. The problem is, during loop execution, to load the proper configuration and standard bits from the micro code memory 51 into the appropriate bit positions of the control register. To achieve this, as already mentioned above, a configuration mask 61 is provided together with every configuration in the dedicated memory block 25 or 26 of Fig. 1. When a new loop is to be executed, the corresponding configuration mask 61 is loaded into a configuration mask register 63 of a control word loader 64 responsible for loading control data from the micro-code memory 51 to the appropriate positions of the control register 50, as defined by the configuration mask register 63. The execution of the loop can then start. For every control data of the standard part 11, the control word loader 64 will direct each bit to its appropriate position in the control register 50, without changing the pre-loaded configuration 62, obtained from the dedicated memory 25 or 26.

It is noted that the pattern of zeros and ones in the configuration mask register 63 are not control signals, but simply specify which bit positions in the control word are loop-invariant and which are not. On the other hand, the zeros and ones in the loop configuration 62 are indeed the control signals that will control the processors data path, e.g. opcodes for functional units, register addresses, multiplexer select inputs, etc.

Fig. 5 shows a schematic diagram indicating an architecture of the control word loader 64 shown in Fig. 4. As indicated in Fig. 5, a program counter PC points to the actual standard part 11 of the control word 10, stored in the micro code storage 51 or instruction memory or cache. As already mentioned, the remaining fixed part or configuration is stored in the dedicated memory 25 or 26. Thus, the normal instruction memory or micro code storage 51 only contains the standard part of the control word 10. Then, new configurations are loaded into the control register 50 under software control. However, this load function is not shown in Fig. 5. The size of each control word in the dedicated memory 25 or 26 may be the same as in the instruction register 50 of the processor. This way, together with each configuration 62, the bits corresponding to the standard part 11 of the first control word or instruction in the corresponding loop can also be stored in the dedicated memory block 25 or 26. Due to the fact that the word sizes are the same, a word (configuration) of the dedicated memory block 25 or 26 can be loaded directly into the processor's instruction register, completely by-passing a programmable cross-point switch 73 provided in the control word loader 64 shown in Fig. 5. By doing so, the first standard part 11 of the control word of the loop is automatically loaded in parallel.

The programmable cross-point switch 73 may consist of a multiplexer chain, each multiplexer being controlled by a set of bits coming from a mask interpretation logic 71. In particular, the programmable cross-point switch 73 may also have controllable tri-state buffers, while the collection of all individual multiplexer and buffer control bits make up switch control signals 72. The mask interpretation logic 71 is arranged to translate the contents of the configuration mask register 63 into the switch control signals 72. The use of the mask interpretation logic 71 provides the following two advantages. Firstly, it de-couples the particular switch architecture from the semantics of the loop configuration mask 61. This allows, for instance, for a switch upgrade preserving binary code compatibility with the previous version. Secondly, the number of bits in the configuration mask register 63 will typically be much smaller than the number of bits making up the switch control signals 72, allowing for a reduction in the memory capacity required for the loop configurations 61. Nevertheless, the system can be arranged such that no loop configuration mask 63 is provided and no mask interpretation logic 71. Then, the bits of the loop configuration 61 directly form the switch control signals 72.

As mentioned before, in the first preferred embodiment the pattern of zeros and ones in the configuration mask encode which bit positions in the control word are loop-invariant and which are not. In fact, since the mask interpretation logic 71 de-couples the semantics of the loop configuration mask from the switch architecture, several other forms of encoding the information in the configuration mask can be used as well, which could reduce the bit-width required to store that information.

The programmable cross-point switch 73 can be fully connected, but does not need to. For instance, the first bit of the standard part 11 can be routed to any bit position of the control register 50, while the second bit position of the standard part 11 need not be routable to the first bit position of the control register 50. Furthermore, the third bit position of the standard part 11 need not be routable to the first and second bit positions in the control register 50, and so on. A similar rational can be applied to higher-order bits. By applying this rational, some of the connections can be physically removed from the cross-point switch 73, since they will then never be used.

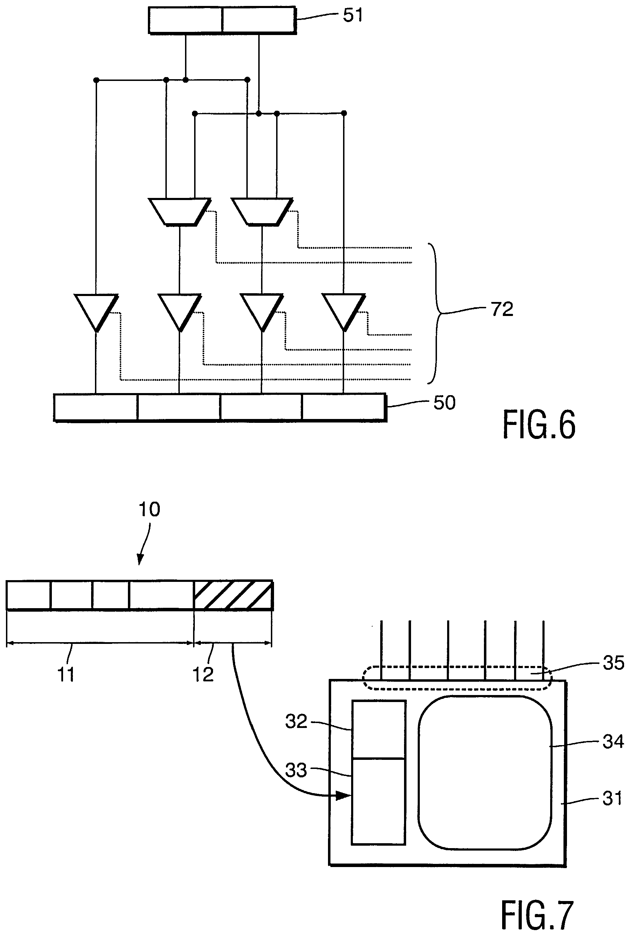

Fig. 6 shows an example of an embodiment of the programmable cross-point switch 73 for a simplified case where the standard part 11 of the instruction obtained from the micro code storage 51 contains only two bits, while the controlled processor data path needs a four-bit control word in the control register 50. Thus, the instruction obtained from the micro-code storage 51 comprises two bits and the control register 50 comprises four bits. The connection paths of the cross-point switch 73 can then be controlled via multiplexers and tri-state buffers based on the switch control signals 72. In the present case, the left bit of the instruction, i.e. standard part 11, can be switched to all bit positions of the control register 50, except the rightmost bit position, while the right bit of the instruction can be switched to all bit positions of the control register 50, except the leftmost bit position.

Fig. 7 shows a schematic diagram of a decoding architecture according to the second preferred embodiment, where the fixed part 12 of the control word 10 is used to control a re-configurable register file 31. Due to the specific nature of re-configurable hardware resources, higher flexibility is available, which can be exploited to improve cost-efficiency even further. An example of a re-configurable hardware unit which can be used in a second preferred embodiment is an embedded FPGA.

When the register file 31 is implemented in re-configurable logic, all resources are mapped spatially. The control over the resources is achieved through configuration memory bits. A configuration memory 32 is loaded with a new configuration context when a new type of data flow graph is to be executed. An internal configuration controller 33 takes care of selecting the right configuration context based on the fixed part 12 of the control word 10. Since the fixed part 12 of the control word 10 is left unchanged for a number of cycles, the potential reconfiguration time penalty, associated with reloading of a configuration memory context, is insignificant.

If the re-configurable register file 31 is to be arranged to use a standard control word, the configuration context has to be adapted thereto.

The re-configurable register file 31 further comprises a configurable logic array 34 controlled based on the bit states in the configuration memory 32. Thereby, a configurable interface 35 can be configured as to provide desired inputs, outputs, and/or control words. Thereby, not only connections to functional units may be programmable, but also, for example, the depth of the register files 21. Furthermore, implementation of specialised register file architectures, such as FIFOs (First-In-First-Out) and stacks, in the reconfigurable logic is possible. Due to the simplified addressing scheme required for structures like FIFOs and stacks, the size of the standard part 11 of the control word required to address the register file can be reduced considerably.

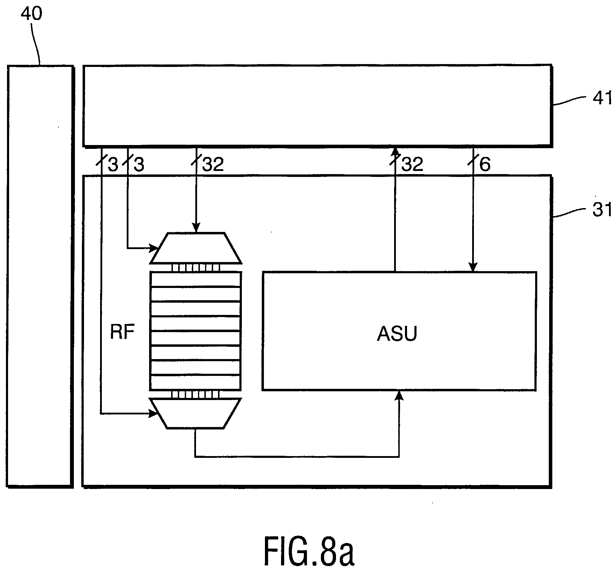

Fig. 8A shows a processor architecture according to the second preferred embodiment with a processor controller 40 for controlling a data path which comprises a processor data path 41 and an FPGA block 31 as the re-configurable hardware. The FPGA block 31 is arranged to implement a circuitry consisting of an application-specific unit ASU and an associated register file RF. The application-specific unit ASU is built in a flexible enough way to allow it to be used within different loops of the application.

In the present case shown in Fig. 8A, the application-specific unit ASU and the register file RF are arranged to accelerate critical loops of the application, and their architecture is flexible enough for the FPGA block 31 to be used in all of the critical loops. It is noted that different loops may require the application-specific unit ASU to execute different operations, or to address different registers in its associated register file RF. To allow for this flexibility, the ports of the associated register file RF and the application-specific unit ASU are controlled by the bits of the instruction or control word issued in the processor data path 41. In Fig. 8A, twelve control bits are required for providing reading addresses to the associated register file RF, writing addresses to the associated register file, and an opcode for the application-specific unit ASU, respectively.

However, many of these control parameters will not vary within a specific loop. Therefore, for that specific loop or other instruction sequence, it is not necessary to provide for twelve control bits in the instruction word to control the circuitry mapped onto the FPGA block 31. Thus, the instruction word width can be reduced, saving instruction memory.

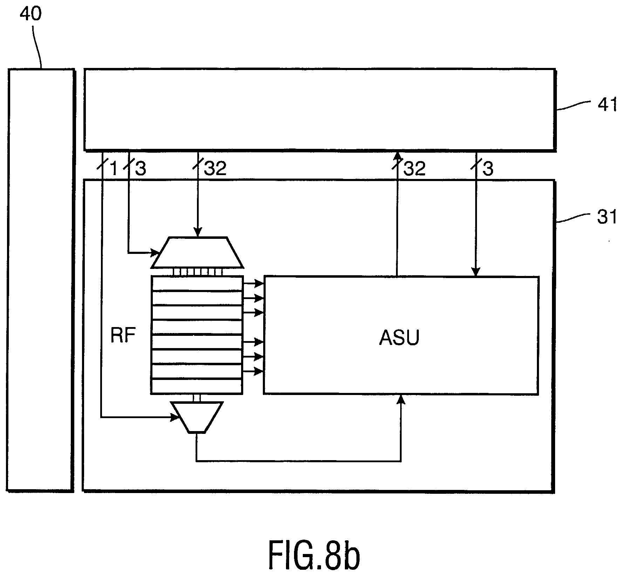

Fig. 8B illustrates the configuration of the FPGA block 31 when the loop-invariant part of the control word of a loop is hoisted. In particular, within a specific loop, six connections between the application-specific unit ASU and associated register file RF never change, such that these six registers need not be addressed explicitly. This reduces the width of the read address from three to one bit. Also, only a subset of the operations of the application-specific unit ASU are needed within the specific loop, such that certain bits of their respective opcodes are redundant in that loop, and can be wired in the FPGA configuration itself. As a result, in total, only seven bits (three write address bits, one read address bit, and three opcode bits) are now needed in the instruction word to control the FPGA block 31 within that specific loop.

Due to the fact that the FPGA block 31 is flexible, the vary hardware structure mapped onto it can be reconfigured so to interpret the reduced number of control bits properly. In Fig. 8B, for instance, point-to-point connections (indicated by six corresponding arrows) between registers of the associated register file RF and the application-specific unit ASU where created, the size of an address decoder multiplexer of the associated register file RF was reduced, and the internal structure of the application specific unit ASU was changed to correctly interpret the smaller 3-bit-opcode. Potentially, the application-specific unit ASU itself can be made smaller, by throwing away the parts of its soft-circuitry which corresponds to operations never executed within that given loop.

Thus, the general strategy is to limit the number of bits in the instruction word that can be used to control the FPGA block 31, therefore saving instruction memory. In spite of the reduction, the FPGA block 31 may still be used by several different critical loops in the application, by using the hoisting concept.

Another general strategy is to investigate which critical loops in the application have the largest loop-invariant parts and can benefit most from hoisting. These loops are then chosen for mapping onto re-configurable hardware units, such as the FPGA block 31, which can exploit hoisting, instead of being mapped onto hard-wired units and register files of the rest of the processor data path 41.

It is noted that the present invention is not restricted to the preferred embodiments explained above, and can be used in any processor environment where a sequence of at least two instructions of a data processing program is decoded into a sequence of code words used to control a data path. In particular, the suggested hoisting concept may be used for other instruction sequences which are decoded into code word sequences with variant and invariant parts. The preferred embodiments may thus vary within the scope of the attached claims.

## Claims

1. A method of decoding a sequence of at least two instructions of a data processing program into a sequence of code words used to control a data path (31, 41), wherein said sequence of at least two instructions forms a loop body of said data processing program, said method comprising the steps of:
a) separating an invariant code word portion which does not change in said sequence of code words; and
b) using said invariant code word portion to configure a part of said data path (31, 41) to be fixed during said sequence of code words, said method being **characterized by** the step of using a configuration mask register (63) for controlling a control word loading means (64), so as to load the bits in the variant code portion of said sequence of code words into the appropriate bit positions of a control register (50).

2. A method according to claim 1, further comprising the step of using said separated invariant code word portion to address a dedicated memory (25; 26).

3. A method according to claim 2, further comprising the step of implementing said dedicated memory (25; 26) as a look-up table or a content addressable memory.

4. A method according to claim 2 or 3, further comprising the step of sharing said dedicated memory (26) among a plurality of functional units (FU) of said data path (41).

5. A method according to any one of claims 2 to 4, further comprising the step of providing a plurality of dedicated memories (25) allocated to respective functional units (FU) of said data path (31, 41).

6. A method according to any one of claims 2 to 5, further comprising the steps of expanding said invariant code word portion to a new code word, and using said new code word to control said data path (31, 41).

7. A method according to claim 6, further comprising the step of controlling said data path (31, 41) by said new code word using the same connections as said sequence of code words.

8. A method according to claim 7, further comprising the step of selecting said same connections via a multiplexing function.

9. A method according to claim 1, wherein said configuration mask is encoded.

10. A method according to claim 9 wherein said configuration mask is a binary pattern.

11. A method according to claim 10, further comprising the step of using said configuration mask to generate switching signals for connecting to said control register (50).

12. A method according to any one of claims 2 to 11, further comprising the step of selecting a size of said dedicated memory to correspond to the size of an instruction register.

13. A method according to claim 1, further comprising the step of configuring said part of said data path (31, 41) by using a re-configurable hardware (31).

14. A method according to claim 13, further comprising the step of selecting a configuration context based on said invariant code word portion.

15. A method according to claim 13 or 14, further comprising the step of reducing the number of control bits controlling said re-configurable hardware (31) according to configurations required by said sequence of code words.

16. A method according to any one of claims 13 to 15, further comprising the step of selecting from said sequence of at least two instructions those instructions with the largest invariant code word portions, and using said selected instructions for mapping onto said re-configurable hardware (31).

17. An apparatus for decoding a sequence of at least two instructions of a data processing program into a sequence of code words used to control a data path (31, 41), wherein said sequence of at least two instructions forms a loop body of said data processing program, said apparatus comprising:
a) generating means for separately generating an invariant code word portion which does not change in said sequence of code words; and
b) configuring means (25; 26; 31, 61, 63) for receiving said invariant code word portion and for configuring a part of said data path to be fixed during said sequence of code words, said apparatus being **characterized by** a configuration mask register (63) for controlling a control word loading means (64), so as to load the bits in the variant code portion of said sequence of code words into the appropriate bit positions of a control register (50).

18. An apparatus according to claim 17, wherein said configuring means comprises dedicated memory means (25; 26) for storing a new control word which corresponds to said invariant code word portion.

19. An apparatus according to claim 18, wherein said configuring means further comprises decoding means for decoding said new control word from said dedicated memory means (25; 26) into control signals to control the data path (41).

20. An apparatus according to claim 19, wherein said control word loading means (64) comprises a programmable cross-point switch (73).

21. An apparatus according to claim 20, wherein said control word loading means (64) further comprises a mask interpretation logic (71), connected to said programmable cross-point switch (73) and said configuration mask register (63).

22. An apparatus according to claim 17 wherein said configuration means comprises re-configurable hardware means (31) configured based on said invariant code word portion.

## Patentansprüche

1. Verfahren zur Decodierung einer Sequenz von mindestens zwei Instruktionen eines Datenverarbeitungsprogramms in eine Sequenz von zur Steuerung eines Datenweges (31, 41) verwendeten Codewörtern, wobei die Sequenz von mindestens zwei Instruktionen einen Schleifenkörper des Datenverarbeitungsprogramms bildet, wobei das Verfahren die folgenden Schritte umfasst, wonach:
a) ein invarianter Codewortabschnitt, der sich in der Sequenz von Codewörtern nicht verändert, getrennt wird; und
b) der invariante Codewortabschnitt dazu verwendet wird, einen Teil des Datenweges (31, 41) so zu konfigurieren, dass er in der Ablauffolge von Codewörtern festgelegt ist,
wobei das Verfahren **gekennzeichnet ist durch**:
den Schritt des Verwendens eines Konfigurationsmaskenregisters (63) zur Steuerung eines Steuerwortlademittels (64), um die Bits in dem varianten Codeabschnitt der Sequenz von Codewörtern in die entsprechenden Bitpositionen eines Steuerregisters (50) zu laden.

2. Verfahren nach Anspruch 1, weiterhin umfassend den Schritt des Verwendens des getrennten invarianten Codewortabschnitts zur Adressierung eines dedizierten Speichers (25; 26).

3. Verfahren nach Anspruch 2, weiterhin umfassend den Schritt des Implementierens des dedizierten Speichers (25; 26) als eine Lookup-Tabelle oder einen inhaltsadressierbaren Speicher.

4. Verfahren nach Anspruch 2 oder 3, weiterhin umfassend den Schritt des gemeinsamen Nutzens des dedizierten Speichers (26) unter mehreren Funktionseinheiten (FU) des Datenweges (41).

5. Verfahren nach einem der Ansprüche 2 bis 4, weiterhin umfassend den Schritt des Vorsehens mehrerer dedizierter, jeweiligen Funktionseinheiten (FU) des Datenweges (31, 41) zugeordneter Speicher (25).

6. Verfahren nach einem der Ansprüche 2 bis 5, weiterhin umfassend die Schritte des Erweiterns des invarianten Codewortabschnitts auf ein neues Codewort sowie des Verwendens des neuen Codewortes zur Steuerung des Datenweges (31, 41).

7. Verfahren nach Anspruch 6, weiterhin umfassend den Schritt der Steuerung des Datenweges (31, 41) durch das neue Codewort unter Verwendung der gleichen Verbindungen wie der Sequenz von Codewörtern.

8. Verfahren nach Anspruch 7, weiterhin umfassend den Schritt des Auswählens der gleichen Verbindungen über eine Multiplexfunktion.

9. Verfahren nach Anspruch 1, wobei die Konfigurationsmaske codiert wird.

10. Verfahren nach Anspruch 9, wobei es sich bei der Konfigurationsmaske um ein Binärmuster handelt.

11. Verfahren nach Anspruch 10, weiterhin umfassend den Schritt des Verwendens der Konfigurationsmaske zur Erzeugung von Schaltsignalen zum Anschluss an das Steuerregister (50).

12. Verfahren nach einem der Ansprüche 2 bis 11, weiterhin umfassend den Schritt des Auswählens einer Größe des dedizierten Speichers, um der Größe eines Instruktionsregisters zu entsprechen.

13. Verfahren nach Anspruch 1, weiterhin umfassend den Schritt des Konfigurierens des Teils des Datenweges (31, 41) unter Verwendung einer rekonfigurierbaren Hardware (31).

14. Verfahren nach Anspruch 13, weiterhin umfassend den Schritt des Auswählens eines Konfigurationskontextes auf Basis des invarianten Codewortabschnitts.

15. Verfahren nach Anspruch 13 oder 14, weiterhin umfassend den Schritt des Reduzierens der Anzahl von Steuerbits zur Steuerung der rekonfigurierbaren Hardware (31) entsprechend durch die Sequenz von Codewörtern erforderlichen Konfigurationen.

16. Verfahren nach einem der Ansprüche 13 bis 15, weiterhin umfassend den Schritt, wonach aus der Sequenz von mindestens zwei Instruktionen diese Instruktionen mit den größten invarianten Codewortabschnitten ausgewählt werden und die ausgewählten Instruktionen zur Abbildung auf der rekonfigurierbaren Hardware (31) verwendet werden.

17. Vorrichtung zur Decodierung einer Sequenz von mindestens zwei Instruktionen eines Datenverarbeitungsprogramms in eine Sequenz von zur Steuerung eines Datenweges (31, 41) verwendeten Codewörtern, wobei die Sequenz von mindestens zwei Instruktionen einen Schleifenkörper des Datenverarbeitungsprogramms bildet, wobei die Vorrichtung umfasst:
a) Erzeugungsmittel, um einen invarianten Codewortabschnitt getrennt zu erzeugen, der sich in der Sequenz von Codewörtern nicht verändert; sowie
b) Konfigurationsmittel (25; 26; 31, 61, 63), um den invarianten Codewortabschnitt zu empfangen und einen Teil des Datenweges so zu konfigurieren, dass er in der Ablauffolge von Codewörtern festgelegt ist,
wobei die Vorrichtung **gekennzeichnet ist durch**:
ein Konfigurationsmaskenregister (63) zur Steuerung eines Steuerwortlademittels (64), um die Bits in dem varianten Codeabschnitt der Sequenz von Codewörtern in die entsprechenden Bitpositionen eines Steuerregisters (50) zu laden.

18. Vorrichtung nach Anspruch 17, wobei das Konfigurationsmittel dedizierte Speichermittel (25; 26) zur Speicherung eines neuen Steuerwortes umfasst, das dem invarianten Codewortabschnitt entspricht.

19. Vorrichtung nach Anspruch 18, wobei das Konfigurationsmittel weiterhin Decodiermittel umfasst, um das neue Steuerwort aus den dedizierten Speichermitteln (25; 26) in Steuersignale zur Steuerung des Datenweges (41) zu decodieren.

20. Vorrichtung nach Anspruch 19, wobei das Steuerwortlademittel (64) einen programmierbaren Crosspoint-Schalter (73) umfasst.

21. Vorrichtung nach Anspruch 20, wobei das Steuerwortlademittel (64) weiterhin eine Maskeninterpretationslogik (71) umfasst, die mit dem programmierbaren Crosspoint-Schalter (73) und dem Konfigurationsmaskenregister (63) verbunden ist.

22. Vorrichtung nach Anspruch 17, wobei das Konfigurationsmittel rekonfigurierbare, auf Basis des invarianten Codewortabschnitts konfigurierte Hardwaremittel (31) umfasst.

## Revendications

1. Procédé de décodage d'une séquence d'au moins deux instructions d'un programme de traitement de données en une séquence de mots de code utilisés pour commander un trajet de données (31, 41), dans lequel ladite séquence d'au moins deux instructions forme un corps de boucle dudit programme de traitement de données, ledit procédé comprenant les étapes consistant à :
a) séparer une partie de mot de code invariante qui ne change pas dans ladite séquence de mots de code ; et
b) utiliser ladite partie de mot de code invariante pour configurer une partie dudit trajet de données (31, 41) à fixer au cours de ladite séquence de mots de code,
ledit procédé étant **caractérisé par** l'étape d'utilisation d'un registre de masque de configuration (63) pour commander un moyen de chargement de mots de commande (64) de manière à charger les bits dans la partie de code variante de ladite séquence de mots de code dans les positions binaires appropriées d'un registre de commande (50).

2. Procédé selon la revendication 1, comprenant en outre l'étape d'utilisation de ladite partie de mot de code invariante séparée pour adresser une mémoire dédiée (25 ; 26).

3. Procédé selon la revendication 2, comprenant en outre l'étape de mise en oeuvre de ladite mémoire dédiée (25 ; 26) sous la forme d'une table de consultation ou d'une mémoire à contenu adressable.

4. Procédé selon la revendication 2 ou 3, comprenant en outre l'étape de partage de ladite mémoire dédiée (26) parmi une pluralité d'unités fonctionnelles (FU) dudit trajet de données (41).

5. Procédé selon l'une quelconque des revendications 2 à 4, comprenant en outre l'étape de fourniture d'une pluralité de mémoires dédiées (25) affectées à des unités fonctionnelles respectives (FU) dudit trajet de données (31, 41).

6. Procédé selon l'une quelconque des revendications 2 à 5, comprenant en outre les étapes d'expansion de ladite partie de mot de code invariante vers un nouveau mot de code et l'utilisation dudit nouveau mot de code pour commander ledit trajet de données (31, 41).

7. Procédé selon la revendication 6, comprenant en outre l'étape de commande dudit trajet de données (31, 41) par ledit nouveau mot de code en utilisant les mêmes connexions que ladite séquence de mots de code.

8. Procédé selon la revendication 7, comprenant en outre l'étape de sélection desdites mêmes connexions via une fonction de multiplexage.

9. Procédé selon la revendication 1, dans lequel ledit masque de configuration est codé.

10. Procédé selon la revendication 9, dans lequel ledit masque de configuration est un motif binaire.

11. Procédé selon la revendication 10, comprenant en outre l'étape d'utilisation dudit masque de configuration pour générer des signaux de commutation afin de se connecter audit registre de commande (50).

12. Procédé selon l'une quelconque des revendications 2 à 11, comprenant en outre l'étape de sélection d'une taille de ladite mémoire dédiée pour correspondre à la taille d'un registre d'instructions.

13. Procédé selon la revendication 1, comprenant en outre l'étape de configuration de ladite partie dudit trajet de données (31, 41) en utilisant un matériel reconfigurable (31).

14. Procédé selon la revendication 13, comprenant en outre l'étape de sélection d'un contexte de configuration basé sur ladite partie de mot de code invariante.

15. Procédé selon la revendication 13 ou 14, comprenant en outre l'étape de réduction du nombre de bits de commande commandant ledit matériel reconfigurable (31) selon des configurations requises par ladite séquence de mots de code.

16. Procédé selon l'une quelconque des revendications 13 à 15, comprenant en outre l'étape de sélection dans ladite séquence d'au moins deux instructions des instructions ayant les parties de mots de code invariantes les plus grandes et d'utilisation desdites instructions choisies pour mapper sur ledit matériel reconfigurable (31).

17. Appareil de décodage d'une séquence d'au moins deux instructions d'un programme de traitement de données en une séquence de mots de code utilisés pour commander un trajet de données (31, 41), dans lequel ladite séquence des au moins deux instructions forme un corps de boucle dudit programme de traitement de données, ledit appareil comprenant :
a) des moyens de génération pour générer séparément une partie de mot de code invariante qui ne change pas dans ladite séquence de mots de code ; et
b) un moyen de configuration (25 ; 26 ; 31, 61, 63) pour recevoir ladite partie de mot de code invariante et configurer une partie dudit trajet de données à fixer au cours de ladite séquence de mots de code, ledit appareil étant **caractérisé par** un registre de masque de configuration (63) pour commander un moyen de chargement de mot de commande (64), afin de charger les bits dans la partie de code variante de ladite séquence de mots de code dans les positions binaires appropriées d'un registre de commande (50).

18. Appareil selon la revendication 17, dans lequel ledit moyen de configuration comprend des moyens de mémoire dédiés (25 ; 26) pour stocker un nouveau mot de code qui correspond à ladite partie de mot de code invariante.

19. Appareil selon la revendication 18, dans lequel ledit moyen de configuration comprend en outre un moyen de décodage pour décoder ledit nouveau mot de code dudit moyen de mémoire (25, 26) dédiée en signaux de commande pour commander le trajet de données (41).

20. Appareil selon la revendication 19, dans lequel ledit moyen de chargement de mots de commande (64) comprend un commutateur à point de croisement programmable (73).

21. Appareil selon la revendication 20, dans lequel ledit moyen de chargement de mot de commande (64) comprend une logique d'interprétation de masque (71) connectée audit commutateur à point de croisement programmable (73) et audit registre de masque de configuration (63).

22. Appareil selon la revendication 17, dans lequel ledit moyen de configuration comprend un moyen à matériel reconfigurable (31) configuré sur la base de ladite partie de mot de code invariante.
